Europäisches Patentamt

European Patent Office

Office européen des brevets

(11) Veröffentlichungsnummer: **0 359 965**

**A1**

## (12) EUROPÄISCHE PATENTANMELDUNG

(21) Anmeldenummer: **89114531.0**

(22) Anmeldetag: **07.08.89**

(51) Int. Cl.5: **C02F 1/72 , C02F 1/20 , C02F 3/24 , A01K 63/04**

(30) Priorität: **22.09.88 DE 3832150**

(43) Veröffentlichungstag der Anmeldung:
**28.03.90 Patentblatt 90/13**

(84) Benannte Vertragsstaaten:
**AT BE CH DE ES FR GB GR IT LI LU NL SE**

(71) Anmelder: **Seidlitz, Ulrich**
**Strandweg 9**
**D-3593 Edertal-Rehbach(DE)**

(72) Erfinder: **Seidlitz, Ulrich**
**Strandweg 9**
**D-3593 Edertal-Rehbach(DE)**

(74) Vertreter: **Walther, Horst, Dipl.-Ing.**
**Wilhelmshöher Allee 275 Postfach 41 01 08**
**D-3500 Kassel(DE)**

(54) **Verfahren zur Anreicherung von Gewässern mit Sauerstoff.**

(57) Verfahren zur Anreicherung von Gewässern mit Sauerstoff, die der Aufzucht und dem Transport von Fischen dienen, wobei ein dünner Wasserfilm gebildet wird und der Wasserfilm mit dem Sauerstoff in Verbindung steht, wobei der Wasserfilm eine Stärke von 0,5 mm bis 1 mm aufweist, und der Sauerstoff unter einem geringen Überdruck von etwa von 0,1 - 0,5 Bar steht.

Fig. 1

EP 0 359 965 A1

## Verfahren und Vorrichtung zur Anreicherung von Gewässern mit Sauerstoff, die der Aufzucht und dem Transport von Fischen dienen, wobei ein dünner Wasserfilm gebildet wird.

Die Erfindung betrifft ein Verfahren und eine Vorrichtung zur Anreicherung von Gewässern mit Sauerstoff, die der Aufzucht und dem Transport von Fischen dienen, wobei ein dünner Wasserfilm gebildet wird.

Die Aufzucht von Fischen erfolgt in sogenannten Fischteichen; der Transport von lebenden Fischen auf Lastkraftwagen in dafür vorgesehenen Behältern.

Es ist bekannt, daß Fische über das Wasser Sauerstoff aufnehmen und Kohlensäure und Stickstoff abgeben. Unter Einwirkung des Sonnenlichtes wird tagsüber bei normaler Fischdichte durch die im Fischteich befindlichen Wasserpflanzen genügend Sauerstoff produziert. Während der Nacht hingegen wird von den Wasserpflanzen Sauerstoff verbraucht. Insbesondere wenn die Nächte länger werden, kann der Sauerstoffmangel erheblich werden und ein Fischsterben im Teich bewirken. Es ist nun versucht worden, diesem Mißstand abzuhelfen, indem Fischteiche mit normaler Umgebungsluft belüftet wurden. Dieser Methode blieb jedoch der Erfolg versagt, weil hierdurch nicht genügend Sauerstoff in das Wasser eingebracht werden konnte.

Aus dem deutschen Gebrauchsmuster G 88 02 347.8 ist nun bekannt, das Wasser unter Bildung eines dünnen Wasserfilmes mit Sauerstoff anzureichern. Jedoch wurden keine Angaben gemacht, welche Stärke der Wasserfilm haben muß, und unter welchem Sauerstoffdruck der Wasserfilm mit dem Sauerstoff in Berührung stehen soll, um eine maximale Sättigung des Wassers an Sauerstoff zu erreichen. Es wurde nun herausgefunden, daß der Wasserfilm etwa eine Stärke von 0,5 - 1 mm haben muß; liegt die Stärke des Wasserfilmes unter diesem Wert, reißt der Wasserfilm bereits kurz nach Verlassen der Scheibe ab und fällt in mehr oder weniger großen Tropfen oder Rinnsalen nach unten. Liegt die Stärke des Wasserfilmes über dem angegebenen Wert, so ist die Oberfläche zu gering; hierbei kann sich dann nicht genügend Sauerstoff im Wasser anreichern. Der angegebene Druckbereich für den Sauerstoff ergibt sich daraus, daß bei weniger als 0,1 Bar eine nur geringe Sättigung des Wassers mit Sauerstoff zu ereichen ist, wohingegen bei einem Druck von über 0,5 Bar nicht sämtlicher zur Verfügung stehender Sauerstoff vom Wasser aufgenommen werden kann, mithin das Verfahren zu energieaufwendig wird.

Wie bereits erwähnt, atmen die Fische Kohlensäure und Stickstoff aus. Das Wasser kann aber nur eine bestimmte Menge an Gas aufnehmen. Ist also die Sättigungsgrenze des Wassers an Gas bereits durch die Aufnahme von Kohlensäure und Stickstoff erreicht, kann selbst bei Zuführung von reinem Sauerstoff eine Steigerung des Sauerstoffgehaltes im Wasser nicht mehr erreicht werden. Es ist deshalb erforderlich, daß vor der Anreicherung des Wassers mit Sauerstoff der dünne Wasserfilm unter Unterdruck gebildet wird. Hierdurch wird erreicht, daß im Wasser bereits befindliche Gase, insbesondere Stickstoff und Kohlensäure, herausgezogen werden, so daß die nachfolgende Anreicherung des Wassers mit Sauerstoff möglich ist.

Auch bei der Entgasung weist der Wasserfilm vorzugsweise eine Starke von 0,5 - 1 mm auf; der Unterdruck beträgt hier etwa 0,4 - 0,9 Bar. Dieser Wert stellt das Optimum zwischen eingesetzter Energie und möglicher optimaler Entgasung des Wassers an Kohlensäure und Stickstoff dar.

Aus dem deutschen Gebrauchsmuster 88 02 347.8 ist nun eine Vorrichtung zur Anreicherung von Gewässern mit Sauerstoff bekannt, die in Fischteichen eingesetzt werden kann, wobei mindestens ein dünner Wasserfilm gebildet wird, bestehend aus einem mit einem Wasserzu- und -ablauf versehenen geschlossenen Behälter mit Sauerstoffzuführung, der ein Steigrohr für das Wasser aufweist, an dessen Ende mehrere mit Abstand zueinander angeordnete vom Rohrende aus gesehen konkav gewölbte Scheiben angeordnet sind.

Es hat sich jedoch gezeigt, daß die durch diese Vorrichtung gebildeten pilzartigen Wasserfilme bereits unmittelbar nach dem Austritt mit dem Steigrohr und nach Verlassen der konkav gewölbten Scheiben miteinander in Berührung kommen. Hierbei reißt der Wasserfilm ab, es entstehen dann Wasserläufe, jedoch bleibt keinesfalls ein dünner Wasserfilm bestehen, so daß aufgrund der geringen Oberfläche die Gasaufnahme und hier insbesondere die Sauerstoffaufnahme, aber auch die Entgasung des Wassers an Stickstoff und Kohlensäure, nur sehr ungenügend ist.

Der Erfindung liegt daher die Aufgabe zugrunde, die Vorrichtung der eingangs genannten Art so weiter zu bilden, daß die aus dem Steigrohr austretenden pilzartigen Wasserfilme während des Niedergangs nicht miteinander in Berührung kommen, mithin der Wasserfilm zur größtmöglichen Aufnahme von Sauerstoff über einen relativ langen Zeitraum hin bestehen bleibt, bzw. genug Zeit und Oberfläche zur Entgasung zur Verfügung steht.

Diese Aufgabe wird erfindungsgemäß dadurch gelöst, daß mehrere Steigrohre konzentrisch zueinander ineinander gelagert sind, die eine unterschiedliche Länge aufweisen, wobei jeweils das innenliegende Rohr länger ist als das ihm benachbarte außenliegende Steigrohr, wobei jedem Steigrohr eine mit Abstand zum Rohrende konkav gewölbte Scheibe zugeordnet ist. Hierbei sind die der obersten Scheibe voranstehenden Scheiben mit Öffnungen zum Durchlaß der Steigrohre versehen. Hierdurch wird die Möglichkeit eröffnet, den Wasserzufluß, hier insbesondere den an jedem Steigrohr anstehenden Wasserdruck, gesondert zu steuern, so daß sichergestellt ist, daß sich die an den konkav gewölbten Scheiben ausbildenden pilzförmigen Wasserfilme während ihres Niederganges nicht berühren.

Eine zweite Ausführungsform einer Vorrichtung zur Anreicherung von Gewässern mit Sauerstoff, die der Aufzucht und dem Transport von Fischen dienen, wobei mindestens ein dünner Wasserfilm gebildet wird, der mit dem Sauerstoff in Verbindung steht, zeichnet sich durch einen geschlossenen Behälter mit einem Wasserzu- und einem Wasserabfluß aus. Erfindungsgemäß besitzt ein derartiger Behälter eine Zuführung für den Sauerstoff, wobei, zur Erzeugung des dünnen Wasserfilmes, das Wasser über mehrere seitlich mit Abstand zueinander angeordnete, und im wesentlichen horizontal und parallel zueinander liegende Elemente geführt wird; hierbei ist der Abstand zwischen zwei benachbarten Elementen so gewählt, daß zwischen ihnen ein Schlitz zur Erzeugung des dünnen Wasserfilms gebildet wird.

Nach einer vorteilhaften Ausbildung dieser zweiten Ausführungsform sind die Elemente als Zylinderhälften ausgebildet, wobei der Abstand der Elemente zueinander veränderbar ist. Die Veränderbarkeit wird dadurch bewirkt, daß an zwei sich gegenüberliegenden Behälterwänden Leisten angeordnet sind, die jeweils ein Langloch aufweisen, daß der Aufnahme der Elemente dient.

Aus der GB-Patentschrift 12 96 228 ist eine Vorrichtung zur Anreicherung einer Flüssigkeit mit einem Gas bekannt, die aus einem Behälter mit einer Zuleitung für die Flüssigkeit besteht, und mehrere seitlich mit Abstand zueinander angeordnete und im wesentlichen horizontal und parallel zueinander in mehreren Schichten kreuzweise übereinander angeordnete Stangen aufweist. Über diese Stangen wird im Betrieb die Flüssigkeit geleitet. Die mit Hilfe dieser Vorrichtung erzielte Gasaufnahme ist nur sehr ungenügend, da hierbei das Wasser von den gitterartig angeordneten Stangen im wesentlichen als Rinnsal oder in Form von Tropfen abströmt. Keinesfalls bildet sich jedoch ein dünner von beiden Seiten dem Gas zugänglicher Flüssigkeitsfilm aus, wie es nach der Erfindung der Fall ist.

Nach einem weiteren besonderen Merkmal der Erfindung sind im Behälter Füllkörper angeordnet. Diese Füllkörper, die in etwa zylinderförmig ausgebildet sind und auf ihrem Umfang mehrere Öffnungen aufweisen, dienen der Vergrößerung der Wasseroberfläche, so daß die Sauerstoffaufnahme bzw. die Entgasung noch weiter optimiert werden kann.

Die Füllhöhe des Behälters einer jeden Ausführungsform an Füllkörpern ist nach einem weiteren vorteilhaften Merkmal so gewählt, daß sie der Höhe entspricht, bei der die dünnen Wasserfilme gerade abreißen.

Hingewiesen wird noch darauf, daß beide Ausführungsformen der Vorrichtung zur Anreicherung von Gewässern mit Sauerstoff, auch unmittelbar zur Entgasung eingesetzt werden können; hierbei dient dann zweckmäßigerweise die Zuführung für den Sauerstoff als Ansatzstück für eine Pumpe zur Erzeugung eines Unterdruckes.

Ein weiterer Vorteil des Verfahrens und der Vorrichtung ergibt sich insbesondere auch beim Transport von Fischen. Ist ein konstant hoher Sauerstoffgehalt im Wasser gewährleistet, können mehr Fische pro Kubikmeter Wasser transportiert werden. Beispielsweise kann mit Hilfe dieser Vorrichtung beim Transport das Verhältnis von Kilogramm Fisch zu Kilogramm Wasser bei Forellen von 1 zu 5 auf 1 zu 3 reduziert werden, insbesondere wenn vor der Anreicherung des Wassers mit Sauerstoff dem Wasser vorher der Stickstoff und die Kohlensäure entzogen wird. Entsprechendes gilt natürlich auch für die Gewässer, die der Fischzucht dienen, also beispielsweise Fischteiche.

In der Zeichnung ist eine beispielsweise Ausführungsform dargestellt:

Fig. 1 zeigt eine Ausführungsform mit drei konzentrisch ineinander gelagerten Steigrohren;

Fig. 2 zeigt eine Ausführungsform, bei der das Wasser über Zylinderhälften geführt wird;

Fig. 3 zeigt ein Füllkörperelement in perspektivischer Darstellung in Vergrößerung.

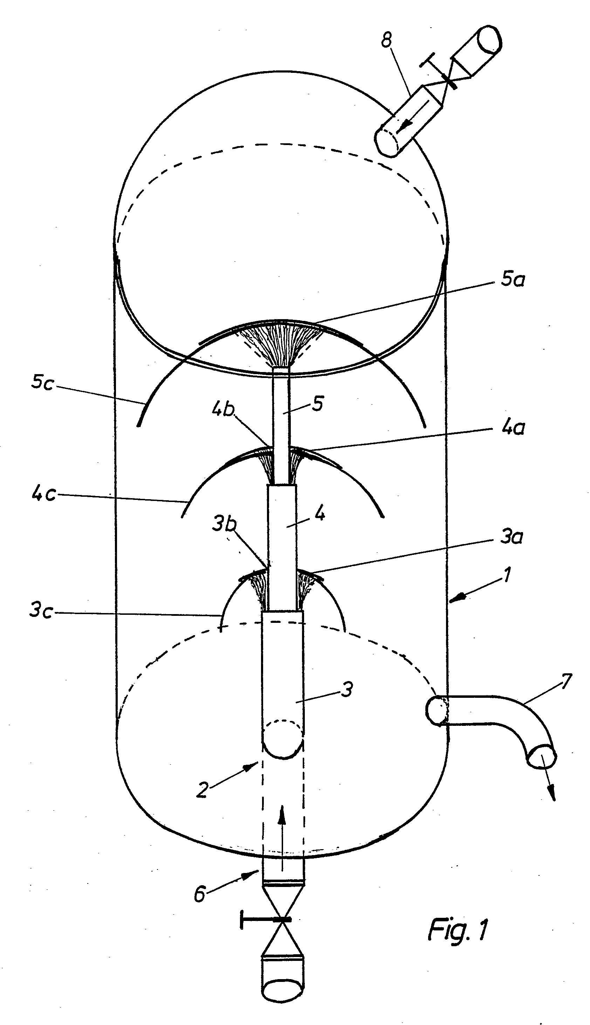

Bei der Ausführungsform gemäß Fig. 1 ist der Behälter mit 1 bezeichnet, die Vorrichtung zur Erzeugung eines oder mehrerer dünner Wasserfilme insgesamt mit 2. Diese Vorrichtung besteht aus drei konzentrisch ineinander gelagerten Steigrohren 3, 4 und 5, die jeweils in einem bestimmten Abstand zum Rohrende eine von Rohrende aus gesehen konkav gewölbte Scheibe 3a, 4a, 5a aufweisen, gegen die das Wasser strömt und beim Abfließen einen pilzartigen Schirm 3c, 4c, 5c, bildet. Die der obersten Scheibe 5a voranstehenden Scheiben 3a, 4a weisen jeweils eine Bohrung 3b, 4b zum Durchlaß der Steigrohre 3, 4 auf.

Die Dicke des Wasserfilmes beträgt etwa 0,5 - 1 mm. Der Wasserzulauf für die Vorrichtung 2 ist mit 6, der Wasserablauf mit 7 bezeichnet. Durch die Zuführung 8 wird der Sauerstoff mit einem Überdruck von etwa 0,5 Bar in den Behälter geleitet.

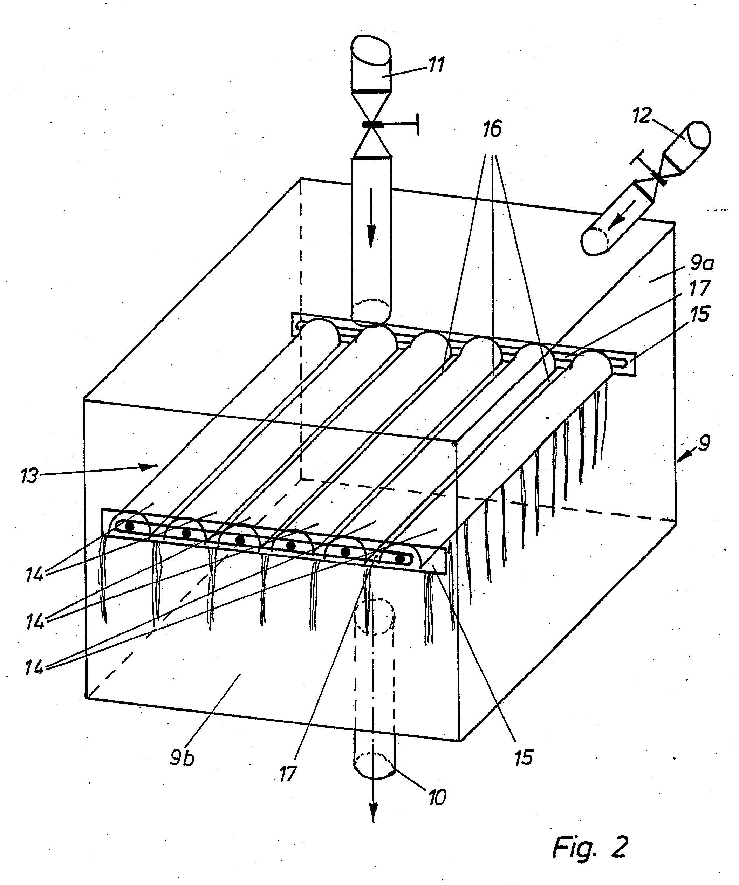

Auch die zweite Ausführungsform besteht aus einem mit 9 gekennzeichneten Behälter, einem Wasserablauf 10 und einem Wasserzulauf 11, sowie einer Sauerstoffzuführung 12. Die Vorrichtung zur Erzeugung eines dünnen Wasserfilmes, in Fig. 2 insgesamt mit 13 bezeichnet, besteht aus einzelnen nebeneinander angeordneten Zylinderhälften 14, die endseitig jeweils in Leisten 15 gelagert sind, die am Behälter 9 befestigt sind. Diese Leisten 15 weisen hierin jeweils ein Langloch 17 auf, in dem Zylinderhälften 14 verschieblich befestigt sind.

Durch die verschiebliche Anordnung der Zylinderhälften 14 wird die Möglichkeit eröffnet, durch Veränderung der Breite der Schlitze 16 die Dicke des Wasserfilms zu variieren. Ähnlich wie bei der Ausführungsform gemäß Fig. 1 steht auch hier der Behälter 9 unter einem Überdruck von etwa 0,5 Bar an Sauerstoff, der durch den Zufluß 12 hereingeleitet wird. Anstelle von Sauerstoff kann dem Behälter 1, 9 auch Kohlensäuregas zugeführt werden, hierdurch wird der ph-Wert des Wassers abgesenkt.

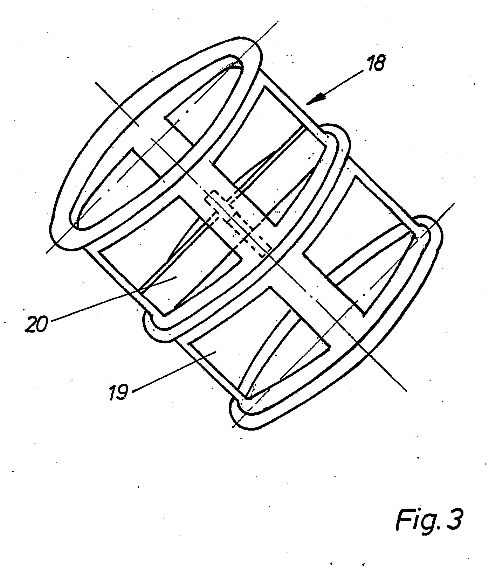

In Fig. 3 ist ein Füllkörperelement 18 dargestellt. Dieses Füllkörperlement 18 ist zylindrisch ausgebildet und weist auf seinem Mantel Öffnungen 19 auf. Zur Erhöhung der Stabilität besitzt jeder Füllkörper 18 eine kreuzförmige Verstärkung 10. Mehrere dieser Füllkörper sind als Haufwerk in den Behältern 1, 9 bis zu einer Höhe aufgeschichtet, bei der die dünnen Wasserfilme gerade abreißen; sie erhöhen die dem Sauerstoff zugängliche Oberfläche des Wassers; gleiches gilt für die Entgasung. An welchem Punkt die Wasserfilme abreißen ist im wesentlichen abhängig von dem an dem jeweiligen Steigrohr anstehenden Druck bei der Ausführungsform gemäß Fig. 1, und von der Breite der Schlitze bzw. dem auf den Elementen anstehenden Wasserdruck bei der Ausführungsform gemäß Fig. 2. In den Fig. 1 und 2 ist wegen der besseren Übersichtlichkeit das Füllkörperhaufwerk jeweils weggelassen.

## Ansprüche

1. Verfahren zur Anreicherung von Gewässern mit Sauerstoff, die der Aufzucht und dem Transport von Fischen dienen, wobei ein dünner Wasserfilm gebildet wird und der Wasserfilm mit dem Sauerstoff in Verbindung steht
**dadurch gekennzechneichnet, daß**
der Wasserfilm eine Stärke von 0,5 mm bis 1 mm aufweist, und daß der Sauerstoff unter einem geringen Überdruck von etwa von 0,1 - 0,5 Bar steht.

2. Verfahren zur Anreicherung von Gewässern mit Sauerstoff, die der Aufzucht und dem Transport von Fischen dienen, wobei ein dünner Wasserfilm gebildet wird,
**dadurch gekennzeichnet, daß**
vor der Anreicherung mit Sauerstoff der gebildete dünne Wasserfilm unter Unterdruck steht.

3. Verfahren nach Anspruch 2
**dadurch gekenzeichnet, daß**
der Wasserfilm eine Stärke von 0,5 - 1 mm aufweist und der Unterdruck etwa 0,4 bis 0,9 Bar beträgt.

4. Vorrichtung zur Anreicherung von Gewässern mit Sauerstoff, die der Aufzucht und dem Transport von Fischen dienen, wobei mindestens ein dünner Wasserfilm gebildet wird, insbesondere nach Anspruch 1 und Anspruch 2, bestehend aus einem mit einem Wasserzu- und Wasserablauf versehenen geschlossenen Behälter mit Sauerstoffzuführung, der ein Steigrohr für das Wasser aufweist, an dessen Ende mehrere mit Abstand zueinander angeordnete vom Rohrende aus gesehen konkav gewölbte Scheiben angeordnet sind,
**dadurch gekennzeichnet, daß**
mehrere Steigrohre (3, 4, 5) konzentrisch zueinander ineinander gelagert sind, die eine unterschiedliche Länge aufweisen, wobei jeweils das innenliegende Rohr länger ist als das ihm benachbarte außenliegende Steigrohr, und daß jedem Steigrohr (3, 4, 5) mit Abstand zum Rohrende eine konkav gewölbte Scheibe (3a, 4a, 5a) zugeordnet ist.

5. Verfahren nach Anspruch 4
**dadurch gekenzeichnet, daß**
die der obersten Scheibe voranstehenden Scheiben (3a, 4a), Öffnungen (3b, 4b) zum Durchlaß der Steigrohre (4, 5) aufweisen.

6. Vorrichtung zur Anreicherung von Gewässern mit Sauerstoff, die der Aufzucht und dem Tranport von Fischen dienen, wobei mindestens ein dünner Wasserfilm gebildet wird, bestehend aus einem geschlossenen Behälter mit einem Wasserzu- und -abfluß, insbesondere nach Anspruch 1 und Anspruch 2,
**dadurch gekennzeichnet, daß**
der Behälter eine Zuführung (12) für den Sauerstoff und mehrere seitlich mit Abstand zueinander angeordnete und im wesentlichen horizontal und parallel zueinander liegende Elemente aufweist, wobei der Abstand zwischen jeweils zwei benachbarten Elementen (14) so gewählt ist, daß zwischen ihnen ein Schlitz (16) gebildet wird, wobei im Betrieb das Wasser in Form eines dünnen Wasserfilmes nach unten strömt.

7. Vorrichtung nach Anspruch 6
**dadurch gekennzeichnet, daß**
die Elemente (14) als Zylinderhälften ausgebildet sind.

8. Vorrichtung nach Anspruch 6
**dadurch gekennzeichnet, daß**
der Abstand der Elemente (14) zueinander veränderbar ist.

9. Vorrichtung nach Anspruch 8
**dadurch gekennzeichnet, daß**
an zwei sich gegenüberliegenden Behälterwänden (9a, 9b) Leisten (15) angeordnet sind, die jeweils ein Langloch (17) aufweisen, das der Aufnahme der Elemente (14) dient.

10. Vorrichtung nach Anspruch 1 und 6 **dadurch gekennzeichnet, daß** der Behälter Füllkörper (18) aufweist.

11. Vorrichtung nach Anspruch 10 **dadurch gekennzeichnet, daß** die Füllhöhe des Behälters (1, 9) an Füllkörpern (18) der Höhe entspricht, bei der die dünnen Wasserfilme abreißen.

12. Vorrichtung nach Anspruch 11 **dadurch gekennzeichnet, daß** ein Füllkörper (18) in etwa zylinderförmig ausgebildet ist, und auf seinem Umfang mehrere Öffnungen (19) aufweist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-U-8 802 347 (U. SEIDLITZ) * Seite 2, Ansprüche 1-3,9-12; Seite 7, letzter Absatz - Seite 8, Absatz 1; Seite 8, letzter Absatz - Seite 9, Absatz 1; Seite 10, Absatz 1 * --- | 1,4-9 | C 02 F 1/72 C 02 F 1/20 C 02 F 3/24 A 01 K 63/04 |
| A | DE-A-2 951 464 (LINDE) * Seite 1, Ansprüche 1-5,7; Seite 3, Zeile 15 - Seite 5, Zeile 11; Seite 6, Zeilen 18-32; Seite 7, Zeile 4 - Seite 9, Zeile 20 * --- | 1-4,10 | |
| A | DE-A-2 111 794 (HAMBURGER WASSER) * Seite 4, Absatz 2; Seite 8, Zeilen 1-4; Seite 8, Absatz 2 * --- | 1 | |
| A | DE-A-3 431 568 (K. KRATZENSTEIN) * Seite 5, Absatz 7 * --- | 1,6,10, 11 | |
| A | US-A-3 756 578 (THERATOR PUMPER) * Spalte 2, Zeile 11 - Spalte 3, Zeile 10 * --- | 4 | |
| A | US-A-2 172 646 (THE AMERICAN WELL WORKS) * Seite 2, Zeilen 34-44,50-55 * ----- | 4 | **RECHERCHIERTE SACHGEBIETE (Int. Cl.5)** C 02 F A 01 K |

Der vorliegende Recherchenbericht wurde für alle Patentansprüche erstellt

| Recherchenort | Abschlußdatum der Recherche | Prüfer |
|---|---|---|
| DEN HAAG | 14-12-1989 | TEPLY J. |